**Europäisches Patentamt**

**European Patent Office**

**Office européen des brevets**

(19)

(11) Veröffentlichungsnummer: **0 075 729**
**A2**

(12) **EUROPÄISCHE PATENTANMELDUNG**

(21) Anmeldenummer: **82107770.8**

(22) Anmeldetag: **24.08.82**

(51) Int. Cl.³: **G 06 F 3/04**
**G 06 F 15/16**

(30) Priorität: **29.09.81 DE 3138758**

(43) Veröffentlichungstag der Anmeldung:
**06.04.83 Patentblatt 83/14**

(84) Benannte Vertragsstaaten:
**FR GB**

(71) Anmelder: **SIEMENS AKTIENGESELLSCHAFT**
**Berlin und München Wittelsbacherplatz 2**
**D-8000 München 2(DE)**

(72) Erfinder: **Arndt, Gerhard, Dipl.-Ing.**
**Carl-Weinberger-Strasse 17**
**D-8150 Holzkirchen(DE)**

(54) **Betriebssystem für eine kommunikative Zusammenarbeit verschiedener Büroterminals in einem integrierten Büro mit einem elektronischen Hauspostsystem.**

(57) Büroterminals unterschiedlicher Klassen, wie beispielsweise Arbeitsplätze, die datenverarbeitungstechnisch orientiert sind, Arbeitsplätze, die teletextechnisch orientiert sind, Telexstationen, Hauspoststation, z. B. Bildschirm-Datensichtgeräte oder Fernkopierer sollen in einem integrierten Büro in beliebiger Kombination miteinander kommunizieren können. Dazu ist vorgesehen, daß eine vorhandene elektronische Hauspostzentrale (HPZ) unter Verwendung von für die unterschiedlichen Klassen ausgelegten Anpassungsbausteinen ($A_1$, $A_2$, $A_3$, $A_4$) mitbenutzt wird.

FIG 1

SIEMENS AKTIENGESELLSCHAFT     Unser Zeichen
Berlin und München     VPA

81 P 7 1 3 5 E

Betriebssystem für eine kommunikative Zusammenarbeit verschiedener Büroterminals in einem integrierten Büro mit einem elektronischen Hauspostsystem

Die vorliegende Erfindung betrifft ein Betriebssystem, das eine kommunikative Zusammenarbeit unterschiedlicher Büroterminals in einem sog. integrierten Büro erlaubt, welches ein sog. elektronisches Hauspostsystem hat.

Eine angestrebte kommunikative Zusammenarbeit solcher Büroterminals ist nur möglich, wenn jedes beliebige mit jedem anderen beliebigen Büroterminal kommunizieren kann. In einem integrierten Büro können Büroterminals aus verschiedenen Büroterminal-Klassen installiert sein, die von ihrem Aufbau und ihrem individuellen Verwendungszweck her von vornherein nicht kommunikationskompatibel sind. Solche Büroterminalklassen beinhalten beispielsweise

- einfache Datensichtgeräte ohne Speicher, die datenverarbeitungstechnisch (Dv)-orientiert sind und für deren Kommunikation untereinander ein zentrales elektronisches Hauspostsystem (Mailbox-System) zur Verfügung steht;
- Bürocomputer mit Datenübertragungseinrichtungen, die Dv-orientiert sind (in aller Regel für eine sog. Mittlere Datentechnik MDT) bestimmt);
- schreibmaschinenorientierte Terminals mit Speicher (im folgenden unter dem Begriff Teletex (Ttx)-orientierte Terminals zusammengefaßt);
- Telex-Stationen;
- Bildschirmtext-Stationen;
- Fernkopierer.

Für Verbindungen zwischen Telex- und Teletex-Stationen
Pap 1 Wi - 25.09.1981

wurde bereits eine außerhalb des betreffenden Büros, nämlich an zentraler Stelle in einem öffentlichen Netz angeordnete Übergangseinrichtung vorgeschlagen.

Der vorliegenden Erfindung liegt die Aufgabe zugrunde,
ein Betriebssystem für eine kommunikative Zusammenarbeit
verschiedener Büroterminals der oben angegebenen Klassen
in einem integrierten Büro mit einer elektronischen Hauspostzentrale zu schaffen, das in der Lage ist, diese Büroterminals in beliebiger Kombination miteinander kommunizieren zu lassen, obwohl die Büroterminals aus Klassen
stammen können, die nicht von vornherein miteinander kommunikationskompatibel sind.

Die der Erfindung zugrundeliegende Aufgabe wird durch ein
Betriebssystem nach dem Oberbegriff des Patentanspruchs 1
gelöst, das durch die in dem kennzeichnenden Teil des Patentanspruchs 1 angegebenen Merkmale charakterisiert ist.

Die Erfindung bietet den Vorteil, daß ein integrierter Bürobetrieb geschaffen werden kann, bei dem Büroterminals
aus unterschiedlichen Büroterminalklassen, die von vornherein aufgrund ihrer unterschiedlichen Verwendungszwecke
und aufgrund ihrer Entwicklungsgeschichte nicht kommunikationskompatibel sind, in beliebigen Kombinationen miteinander kommunizieren können. Vorteilhafterweise geht
die Erfindung davon aus, daß ein ohnehin vorhandenes elektronisches Hauspostsystem (Mailbox-System) mit zu verwenden ist.

Vorteilhafte Weiterbildungen der Erfindung sind durch die
in den Unteransprüchen angegebenen Merkmale gekennzeichnet.

Im folgenden wird die Erfindung an Hand mehrerer, Ausführungsbeispiele für die Erfindung betreffender Figuren im
einzelnen beschrieben.

Fig. 1   zeigt schematisch ein Blockschaltbild eines gesamten Betriebssystems gemäß einer bevorzugten
         Ausführungsform.

Fig. 2   zeigt schematisch ein Blockschaltbild eines Aus-
         führungsbeispiels für das erfindungsgemäße Be-
         triebssystem und die Art der Zusammenarbeit von
         DV-orientierten und schreibmaschinenorientierten
         Büroterminals.

Fig. 3   zeigt schematisch ein Blockschaltbild eines wei-
         teren Ausführungsbeispiels für das erfindungsge-
         mäße Betriebssystem und die Art der Zusammenarbeit von DV-orientierten und Ttx-orientierten Büroterminals.

Fig. 4   zeigt schematisch ein Blockschaltbild eines wei-
         teren Ausführungsbeispiels für das erfindungsge-
         mäße Betriebssystem und die Art der Zusammenarbeit von DV-orientierten und Ttx-orientierten Büroterminals mit Bildschirmtext am Beispiel des
         sog. Mailboxing.

Fig. 5   zeigt schematisch ein Blockschaltbild eines wei-
         teren Ausführungsbeispiels für das erfindungsge-
         mäße Betriebssystem und die Art der Zusammenarbeit von Büroterminals aus dem Text- u. DV-Bereich mit Fernkopierern.

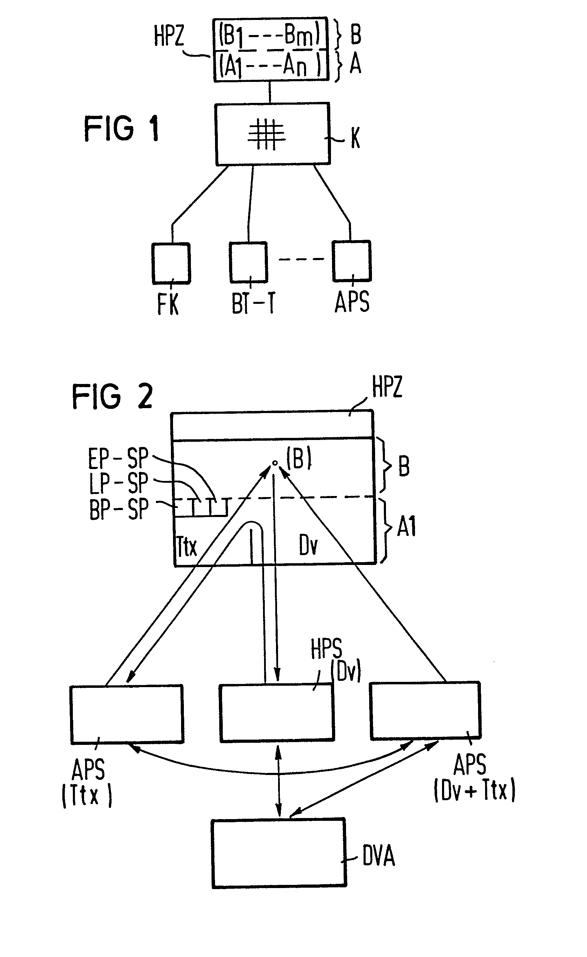

Wie bereits erläutert, zeigt Fig. 1 schematisch ein Blockschaltbild eines gesamten Betriebssystems gemäß einer bevorzugten Ausführungsform der Erfindung. An eine Hauspostzentrale HPZ sind über eine integrierte Nebenstellenanlage (Fernmelde-Nebenstellenanlage oder K-Anlage genannt)
die Terminals angeordnet. In der HPZ sind den Terminals
elektronische Briefkästen (Mailboxes) B zugeordnet. Darüberhinaus ist jeder Terminalgruppe ein Anpassungsbaustein A

0075729

fest zugeordnet. Die einzelnen Büroterminals können einfache Datensichtgeräte ohne Speicher, die Dv-orientiert sind, Bürocomputer mit Datenübertragungseinrichtungen, die Dv-orientiert sind und in aller Regel für eine sog. mittlere Datentechnik MDT bestimmt sind, schreibmaschinenorientierte Terminals mit Speicher, die Ttx-orientierte Terminals sind, Telex-Stationen, Bildschirmtext-Stationen oder Fernkopierer sein. Die Nicht-Teletex-Terminals unter diesen Büroterminals weichen jeweils in unterschiedlichem Ausmaß in folgenden, für die Zusammenarbeit relevanten Punkten vom Teletex-Standard ab:

- Zeichenvorrat (Nutz- und Steuerzeichen),
- Darstellungskapazität der Bildschirme,
- Farbe,
- Datenübertragungs-Modus (Prozedur, Code, Gleichlaufverfahren, Übertragungs-Geschwindigkeit) u.
- Eröffnungsdialog zur gegenseitigen Verständigung über die Ausstattung der Dialogpartner.

Insbesondere bei Datensichtstationen und Arbeitsplatzstationen APS in MDT-Anwendungen tritt das Problem des vom Teletex-Standard abweichenden Zeichenvorrats, der ggf. abweichenden effektiven Darstellungskapazität der derzeitig verwendeten Bildschirme sowie der unterschiedlichen Dokumentformate auf. Der Zeichenvorrat stellt nur einen Auszug (beispielsweise sind keine Kleinbuchstaben vorgesehen) des internationalen Alphabets No. 5 (=Teletex-Grundtabelle) dar und umfaßt nicht die speziellen Zeichen und Buchstaben der Teletex-Erweiterungstabelle.

Insbesondere ist auch der Umfang der Formatierungssteuerzeichen (beispielsweise ist kein Halbzeilenvorschub für die Darstellung von Exponenten vorgesehen) geringer. Ferner ist davon auszugehen, daß die Dv-orientierten Büroterminals mit (Hintergrund-)Datenverarbeitungsanlagen zusammenarbeiten müssen und zwar in der Regel mit bestehenden Verfahren, beispielsweise mit den bekannten MSV-, LSV-Prozeduren. Deshalb müssen sie für einen Übertragungsmodus eingerichtet sein, der voraussichtlich im allgemeinen vom Teletex-Standard abweichen wird.

Zur Lösung der eingangs genannten Aufgabe ist erfindungsgemäß vorgesehen, daß zum Zwecke einer kommunikativen Zusammenarbeit eines datenverarbeitungstechnisch (Dv)-orientierten Büroterminals mit einem teletextechnisch (Ttx)-orientierten Büroterminal ein Ttx/Dv-Anpassungsbaustein A1 vorgesehen ist. Zum Zwecke einer kommunikativen Zusammenarbeit eines Dv-orientierten Büroterminals mit einem Ttx-orientierten Büroterminals mit Telex (Tx)-Stationen ist eine Ttx-Tx/Dv-Anpassungsbaustein A2 vorgesehen. Zum Zwecke einer kommunikativen Zusammenarbeit eines Dv-orientierten Büroterminals mit einem Bildschirmterminal ist ein Ttx/BT-Anpassungsbaustein A3 vorgesehen, der mit dem Ttx/Dv-Anpassungsbaustein A1 zusammenwirkt. Zum Zwecke einer kommunikativen Zusammenarbeit eines Dv-orientierten Büroterminals mit einem Ttx-orientierten Büroterminal zu Fernkopierern oder Telefaxgeräten ist ein Dv-Ttx/Fax-Anpassungsbaustein A4 vorgesehen.

Von den Anpassungsbausteinen sind folgende Eigenschaften zu fordern:

- Es muß ein E/A-Dialog mit den Nicht-Teletex-Büroterminals in deren Sprache durchführbar sein.

- Es muß ein E/A-Dialog in Teletex-Norm möglich sein. (Das Verhalten der Anpassungsbausteine wie ein Teletex-Teilnehmer ermöglicht auch den Verkehr von und zu Telexstationen über das öffentliche Netz).

- Es muß das Zwischenspeichern von Nachrichten möglich sein.

- Es muß das Vermitteln der Nachrichten zu den angeschlossenen Nicht-Teletex-Büroterminals möglich sein.

- Es muß eine Formataufbereitung entsprechend den Möglichkeiten und Anforderungen der Empfängergeräte (beispielsweise das Auswechseln von Formatsteuerzeichen, das Anpassen an Bildschirmabmessungen) möglich sein.

- Es müssen Maßnahmen bei nicht darstellbaren Zeichen (ersetzen durch "Schmierzeichen" oder Umsetzen in Langschrift anhand von Tabellen, beispielsweise in "Dollar" oder das Umschalten von Kleinbuchstaben auf Großbuchstaben) getroffen werden können.

Fig. 2 zeigt, wie bereits erläutert, die Zusammenarbeit von Dv-orientierten Büroterminals mit schreibmaschinenorientierten bzw. Ttx-orientierten Büroterminals gemäß der vorliegenden Erfindung. Es ist die Hauspostzentrale HPZ mit dem Briefkastenteil B und einem Ttx/Dv-Anpassungsbaustein A1 gezeigt. Bei den Büroterminals handelt es sich um eine Arbeitsplatzstation APS, die Ttx-orientiert ist, eine Hauspoststation HPS oder eine Arbeitsplatzstation APS der mittleren Datentechnik MDT ohne Ttx-Modus und eine Arbeitsplatzstation APS der mittleren Datentechnik MDT mit Dv- und Ttx-Modus. Außerdem ist in Fig. 2 eine Datenverarbeitungsanlage DVA dargestellt. Die Art und Weise, wie nun Datenverkehr zwischen den einzelnen Büroterminals und teilweise zwischen diesen und der Datenverarbeitungsanlage DVA abgewickelt wird, ist durch Pfeile dargestellt. So ist beispielsweise ein Datenaustausch zwischen der Hauspoststation HPS und der Arbeitsplatzstation APS in Richtung auf letztere direkt über den Anpassungsbaustein A1 durchführbar. Ebenso kann die Arbeitsplatzstation APS unmittelbar in beiden Richtungen mit der Arbeitsplatzstation der mittleren Datentechnik kommunizieren. Die weiteren Übertragungsrichtungen, die in dem hier gezeigten Ausführungsbeispiel durchführbar sind, sind der Figur klar zu entnehmen.

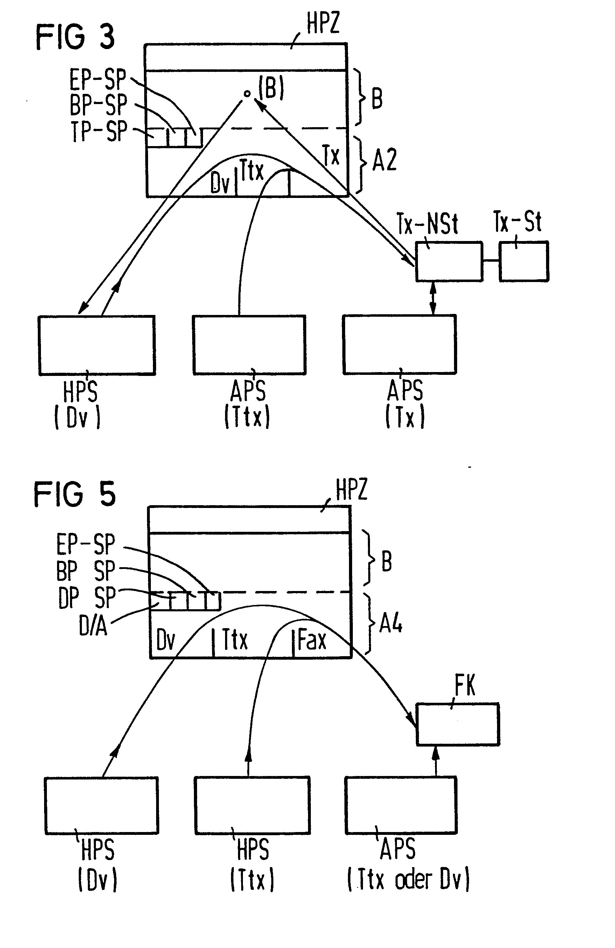

Fig. 3 zeigt, wie bereits erläutert, die Zusammenarbeit von Dv-orientierten und Ttx-orientierten Büroterminals mit Telex (Tx)-Einrichtungen. Es ist die Hauspostzentrale HPZ, mit einem Ttx-Tx/Dv-Anpassungsbaustein A2 wiederum eine Hauspoststation HPS, beispielsweise eine Datensichtstation, eine Ttx-orientierte Arbeitsplatzstation APS, eine weitere Arbeitsplatzstation APS mit Tx-Modus sowie eine Telexnebenstellenanlage Tx-NSt, an die Tx-Stationen angeschlossen sind, dargestellt. Wiederum sind die möglichen Verkehrsbeziehungen für die Datenübertragungsvorgänge durch Pfeile klar aus der Figur entnehmbar.

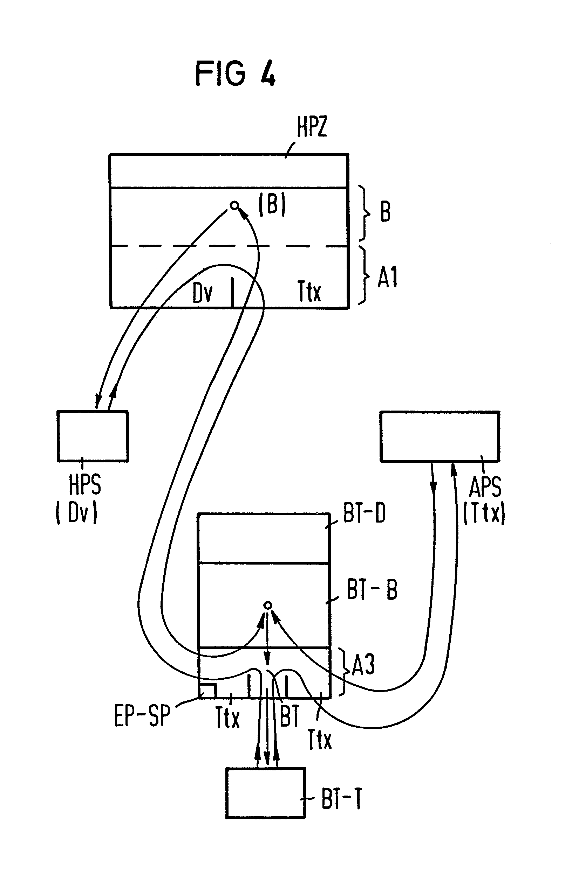

Fig. 4 zeigt, wie bereits erläutert, die Zusammenarbeit von Dv-orientierten und Ttx-orientierten Büroterminals mit Bildschirmtext. Dazu ist eine Hauspostzentrale HPZ mit einem Ttx-Dv-Anpassungsbaustein A1 und einer Bildschirmtext-Datenbank BT-D, ein Bildschirmtext-Briefkastensystem BT-M/B, an das ein Ttx/BT-Anpassungsbaustein A3 angeschlossen ist,dargestellt. Am Anpassungsbaustein A1 ist eine Hauspoststation HPS, beispielsweise eine Datensichtstation, angeschlossen. An das Bildschirmtext-Briefkastensystem BT-NB ist über den Anpassungsbaustein A3 ein Bildschirmtext-Terminal BT-T sowie eine Ttx-orientierte Arbeitsplatzstation APS angeschlossen. Die in dieser Anordnung möglichen Verkehrsbeziehungen sind wiederum aus den dargestellten Pfeilen klar entnehmbar.

Fig. 5 zeigt, wie bereits erläutert, die Zusammenarbeit von Büroterminals aus dem Text und Datenverarbeitungsbereich mit Fernkopierern. Die Hauspostzentrale ist mit dem Ttx-Tx/Dv-Anpassungsbaustein A4 ausgerüstet. Dargestellt sind desweiteren eine Hauspoststation HPS, eine Arbeitsplatzstation APS, die Ttx-orientiert ist, sowie ein Fernkopierer FK, der mit einer Arbeitsplatzstation, welche Ttx- oder Dv-orientiert ist und einen Fax-Umsetzer enthält, direkt zusammenarbeitet. Die möglichen Verkehrsbeziehungen dieser Anordnungen sind wiederum aus den dargestellten Pfeilen klar zu erkennen.

Das erfindungsgemäße Betriebssystem sieht vor, daß der Ttx/Dv-Anpassungsbaustein A1 einen Ttx-orientierten Leitungspufferspeicher LP-SP enthält, vgl. Fig. 2. Außerdem enthält dieser Anpassungsbaustein A1 einen Betriebsprogrammspeicher BP-SP, in dem Programme zur Ausführung der Ttx-Übertragungs- und Signalisierungsprozeduren, der Leitweglenkung (Routing), der ggf. erforderlichen Formatumsetzung und von besonderen Maßnahmen, die bei nichtdarstellbaren Zeichen anzuwenden sind, gespeichert sind. Der Ttx/Dv-Anpassungsbaustein A1 hat vorteilhafterweise eine Verbindungsaufbau- und Zwischenspeicherfunktion.

In der Hauspostzentrale HPZ ist für jedes Büroterminal ein Briefkasten B (Mailbox) individuell vorgesehen, über den der jeweils betreffende Datenverkehr abgewickelt wird. Es ist jedoch in einer Weiterbildung der Erfindung vorgesehen, daß der Datenverkehr von oder in Richtung zu einer einem Büroterminal zugeordneten Arbeitsplatzstation APS ohne Durchlaufen des betreffenden Briefkasten (Mailbox) B direkt mit einem in der Arbeitsplatzstation APS enthaltenen Datenspeicher abgewickelt wird. Es ist vorgesehen, daß der Ttx-Tx/Dv-Anpassungsbaustein A2 einen Betriebsprogrammspeicher BP-SP enthält, in dem Programme zur Ausführung der Telex-Übertragungs- und Signalisierungsprozeduren, der Leitweglenkung (Routing), der Codeumsetzung, der Formatumsetzung und von besonderen Maßnahmen, die bei nichtdarstellbaren Zeichen anzuwenden sind, welche obligatorisch in Richtung zu einer Telex(Tx)-Station und fakultativ in Richtung zu der betreffenden Arbeitsplatzstation APS sind, gespeichert sind. Außerdem ist vorgesehen, daß der Ttx-Tx-Anpassungsbaustein A2 einen Telegrafie-Pufferspeicher TP-SP enthält.

Der Dv-Ttx/Fax-Anpassungsbaustein A4 enthält einen Datenpufferspeicher DP-SP und in Abhängigkeit von dem Typ des

**0075729**

Fernkopierers FK oder Telefaxgerätes ggf. einen Digital/ Analog-Wandler D/A. Es ist außerdem vorgesehen, daß der Dv-Ttx/Fax-Anpassungsbaustein A4 einen Betriebsprogrammspeicher BP-SP enthält, in dem Programme zur Ausführung eines Umsetzens von einem Zeichencode in ein Punktraster, zum Verbindungsaufbau, zum Zwischenspeichern von Daten und zur Ausführung von Übertragungs- und Signalisierungsprozeduren gespeichert sind.

Die Anpassungsbausteine, nämlich der Ttx/Dv-Anpassungsbaustein A1, der Ttx-Tx/Dv-Anpassungsbaustein A2, der Ttx/ BT-Anpassungsbaustein A3 und der Dv-Ttx/Fax-Anpassungsbaustein A4 enthalten jeweils einen Empfangspufferspeicher EP-SP, in den in derartigen Fällen, in denen die Mailbox- Funktion der Hauspostzentrale HPZ nicht in Anspruch genommen wird bzw. nicht in Anspruch genommen werden kann, Nachrichten, die unter den Anpassungsbausteinen ausgetauscht werden, jeweils eingelesen werden.

Vorgesehen ist außerdem, daß eine zentrale Liste vorhanden ist, die von einem Anpassungsbaustein, bei Aufnehmen einer Nachricht von außen von dem betreffenden Anpassungsbaustein abgefragt wird, um festzustellen, zu welchem weiteren Anpassungsbaustein diese Nachricht weitergeleitet werden muß. Diese zentrale Liste eine Information darüber enthält, obe eine ankommende Nachricht in einem Briefkasten (Mailbox) B in der Hauspostzentrale HPZ abzulegen ist.

Ein bevorzugtes Ausführungsbeispiel sieht vor, daß der Ttx/Dv-Anpassungsbaustein A1, der Ttx-Tx/Dv-Anpassungsbaustein A2, der Ttx/BT-Anpassungsbaustein A3 und der Dv- Ttx/Fax-Anpassungsbaustein A4 der Hauspostzentrale HPZ über die integrierte Nebenstellenanlage (Fernsprechanlage, K-Anlage), vgl. Fig. 1 erreicht wird.

14 Patentansprüche
5 Figuren

Patentansprüche:

1. Betriebssystem für eine kommunikative Zusammenarbeit verschiedener Büroterminals in einem integrierten Büro mit einem elektronischen Hauspostsystem, d a d u r c h g e k e n n z e i c h n e t , daß zum Zwecke einer kommunikativen Zusammenarbeit eines datenverarbeitungstechnisch (Dv)-orientierten Büroterminals, beispielsweise einer Hauspoststation (HPS) mit einem teletextechnisch (Ttx)-orientierten Büroterminal, beispielsweise einer Arbeitsplatzstation (APS) ein Ttx/Dv-Anpassungsbaustein (A1) vorgesehen ist, daß zum Zwecke einer kommunikativen Zusammenarbeit eines Dv-orientierten Büroterminals, beispielsweise einer Hauspoststation (HPS) mit einem Ttx-orientierten Büroterminal, beispielsweise einer Arbeitsplatzstation (APS) mit Telex(Tx)-Stationen (Tx-St) ein Ttx-Tx/Dv-Anpassungsbaustein (A2) vorgesehen ist, daß zum Zwecke einer kommunikativen Zusammenarbeit eines Dv-orientierten Büroterminals, beispielsweise einer Hauspoststation (HPS) mit einem Bildschirmtext(BT)-Büroterminal (BT-T) ein bei dem Bildschirmtext(BT)-Büroterminal-(BT-T) angeordneter Ttx/BT-Anpassungsbaustein (A3) vorgesehen ist, der mit dem Ttx/Dv-Anpassungsbaustein (A1) zusammenwirkt, daß zum Zwecke einer kommunikativen Zusammenarbeit eines Dv-orientierten Büroterminals, beispielsweise eineer Hauspoststation (HPS), und einem Ttx-orientierten Büroterminal, beispielsweise einer Arbeitsplatzstation (APS) zu Fernkopierern (FK) oder Telefaxgeräten ein Dv-Ttx/Fax-Anpassungsbaustein (A4) vorgesehen ist und daß der Ttx/Dv-Anpassungsbaustein (A1), der Ttx-Tx/Dv-Anpassungsbaustein (A2), der Ttx/BT-Anpassungsbaustein (A3) und der Dv-Ttx/Fax-Anpassungsbaustein (A4) jeweils einer Hauspostzentrale (HPZ) zugeordnet sind, wobei die jeweils betreffenden Büroterminals Daten über die entsprechenden Anpassungsbausteine (A1; A2; A3; A4) senden und/oder empfangen.

2. Betriebssystem nach Anspruch 1, · d a d u r c h g e -

k e n n z e i c h n e t ,   daß der Ttx/Dv-Anpassungsbaustein (A1) einen Ttx-orientierten Leitungspufferspeicher
(LP-SP) enthält.

3. Betriebssystem nach Anspruch 1,   d a d u r c h   g e -
k e n n z e i c h n e t ,   daß der Ttx/Dv-Anpassungsbaustein (A1) einen Betriebsprogrammspeicher (BP-SP) enthält, in dem Programme zur Ausführung der Ttx-Übertragungs- und Signalisierungsprozeduren, der Leitweglenkung
(Routing), der ggf. erforderlichen Formatumsetzung und
von besonderen Maßnahmen, die bei nichtdarstellbaren Zeichen anzuwenden sind, gespeichert sind.

4. Betriebssystem nach Anspruch 1,   d a d u r c h   g e -
k e n n z e i c h n e t ,   daß in der Hauspostzentrale
(HPZ) für jedes angeschlossene Büroterminal ein Briefkasten (Mailbox) (B) individuell vorgesehen ist und daß
der Datenverkehr jeweils über den betreffenden Briefkasten (Mailbox) (B) abgewickelt wird.

5. Betriebssystem nach Anspruch 1,   d a d u r c h   g e -
k e n n z e i c h n e t ,   daß vorgesehen ist, daß der
Datenverkehr von oder in Richtung zu einer einem Büroterminal zugeordneten Arbeitsplatzstation (APS) ohne Durchlaufen des betreffenden Briefkasten (Mailbox) (B) direkt
mit einem in der Arbeitsplatzstation (APS) enthaltenen
Datenspeicher abgewickelt wird.

6. Betriebssystem nach Anspruch 1,   d a d u r c h   g e -
k e n n z e i c h n e t ,   daß der Ttx/Dv-Anpassungsbaustein (A1) eine Verbindungsaufbau- und Zwischenspeicherfunktion hat.

7. Betriebssystem nach Anspruch 1,   d a d u r c h   g e -
k e n n z e i c h n e t ,   daß der Ttx-Tx/Dv-Anpassungsbaustein (A2) einen Betriebsprogrammspeicher (BP-SP) enthält, in dem Programme zur Ausführung der Teletex-Übertragungs- und Signalisierungsprozeduren, der Leitweglenkung (Routing), der Codeumsetzung , der Formatumsetzung und von besonderen Maßnahmen, die bei nichtdarstellbaren Zeichen anzuwenden sind, welche obligatorisch in Richtung zu einer Telex(Tx)-Station und fakultativ in Richtung zu der betreffenden Arbeitsplatzstation (APS) sind, gespeichert sind.

8. Betriebssystem nach Anspruch 1, d a d u r c h  .g e - k e n n z e i c h n e t ,   daß der Ttx-Tx/Dv-Anpassungsbaustein (A2) einen Telegrafie-Pufferspeicher (TP-SP) enthält.

9. Betriebssystem nach Anspruch 1, d a d u r c h  g e - k e n n z e i c h n e t ,   daß der Dv-Ttx/Fax-Anpassungsbaustein (A4) einen Datenpufferspeicher (DP-SP) und in Abhängigkeit von dem Typ des Fernkopierers (FK) oder Telefaxgerätes ggf. einen Digital/Analog-Wandler (D/A) enthält.

10. Betriebssystem nach Anspruch 1, d a d u r c h  g e - k e n n z e i c h n e t ,   daß der Dv-Ttx/Fax-Anpassungsbaustein (A4) einen Betriebsprogrammspeicher (BP-SP) enthält, in dem Programme zur Ausführung eines Umsetzens von einem Zeichencode in ein Punktraster, zum Verbindungsaufbau, zum Zwischenspeichern von Daten und zur Ausführung von Übertragungs- und Signalisierungsprozeduren gespeichert sind.

11. Betriebssystem nach einem der vorhergehenden Ansprüche, d a d u r c h  g e k e n n z e i c h n e t,   daß die Anpassungsbausteine, nämlich der Ttx/Dv-Anpassungsbaustein (A1), der Ttx-Tx/Dv-Anpassungsbaustein (A2), der Ttx/BT- Anpassungsbaustein (A3) und der Dv-Ttx/Fax-Anpassungsbaustein (A4) jeweils einen Empfangspufferspeicher (EP-SP) enthalten, in den in derartigen Fällen, in denen die Mailbox-Funktion der Hauspostzentrale (HPZ) nicht in Anspruch genommen wird bzw. nicht in Anspruch genommen werden kann, Nachrichten, die unter den Anpassungsbausteinen ausgetauscht werden, jeweils eingelesen werden.

12. Betriebssystem nach einem der vorhergehenden Ansprüche, dadurch gekennzeichnet, daß eine zentrale Liste vorgesehen ist, die von einem Anpassungsbaustein, bei Aufnehmen einer Nachricht von außen von dem betreffenden Anpassungsbaustein abgefragt wird, um festzustellen, zu welchem weiteren Anpassungsbaustein diese Nachricht weitergeleitet werden muß.

13. Betriebssystem nach Anspruch 12, dadurch gekennzeichnet, daß die zentrale Liste eine Information darüber enthält, ob eine ankommende Nachricht in einem Briefkasten (Mailbox) (B) in der Hauspostzentrale (HPZ) abzulegen ist.

14. Betriebssystem nach Anspruch 1, dadurch gekennzeichnet, daß der Ttx/Dv-Anpassungsbaustein (A1), der Ttx-Tx/Dv-Anpassungsbaustein (A2), der Ttx/BT-Anpassungsbaustein (A3) und der Dv-Ttx/Fax-Anpassungsbaustein (A4) der Hauspostzentrale (HPZ) aufeinander richtig eingeordnet werden.

0075729

1/3

FIG 1

FIG 2

**FIG 3**

HPZ

EP-SP
BP-SP
TP-SP

(B)

B

Tx
A2

Dv | Ttx

Tx-NSt    Tx-St

HPS
(Dv)

APS
(Ttx)

APS
(Tx)

**FIG 5**

HPZ

EP-SP
BP SP
DP SP
D/A

B

A4

Dv | Ttx | Fax

FK

HPS
(Dv)

HPS
(Ttx)

APS
(Ttx oder Dv)

FIG 4